# EUROPÄISCHE PATENTSCHRIFT

(11) **EP 0 922 385 B1**
(45) Veröffentlichungstag und Bekanntmachung des Hinweises auf die Patenterteilung: **11.07.2001**
(21) Anmeldenummer: 98123328.1
(22) Anmeldetag: 08.12.1998
(51) Int. Cl.: A01M 7/00

(54) **Landwirtschaftliche Maschine zum Verteilen von Material, vorzugsweise Feldspritze**
Agricultural machine for spreading material, especially field sprayer
Machine agricole pour épandre de la matière, notamment pulvérisateur de champ

(30) Priorität: 10.12.1997 DE 19754930
(43) Veröffentlichungstag der Anmeldung: 16.06.1999
(73) Patentinhaber: Amazonen-Werke H. Dreyer GmbH & Co. KG, 49205 Hasbergen (DE)
(72) Erfinder: Oberheide, Friedrich, Dipl.-Ing., 49143 Bissendorf (DE); Ehlen, Volker, Dipl.-Ing., 29485 Lemgow (DE); Marquering, Johannes, Dipl.-Ing., 49176 Hilter-Borgloh (DE)

(56) Entgegenhaltungen:
- EP-A- 0 157 592
- EP-A- 0 428 963
- EP-A- 0 428 966
- EP-A- 0 726 024
- DE-A- 3 908 963
- DE-A- 4 342 387
- FR-A- 2 734 498

## Beschreibung

Die Erfindung betrifft eine Maschine zum Verteilen von Material, vorzugsweise Feldspritze gemäß des Oberbegriffes des Anspruches 1.

Eine derartige landwirtschaftliche Maschine ist durch die FR-27 34 498 A1 bekannt. Diese Maschine weist eine Höhenmesseinrichtung auf, die den Abstand des Verteilergestänges zum Boden ermittelt. Am Ende des Ausbringstreifens, wenn die Verteilung abgeschaltet ist, wird das Verteilergestänge angehoben. Nach dem Wendevorgang wird die Ausbringung des Materiales wieder eingeschaltet und das Verteilergestänge abgesenkt.

Eine weitere landwirtschaftliche Maschine ist in der Praxis bekannt. Diese Maschine weist ein am Rahmen mittels einer Höheneinstellvorrichtung in unterschiedlichen Höhen einstellbares Verteilergestänge auf. Diese Verteilergestänge werden für das Verteilen von Material in einer definierten Position in einem Abstand zu der zu behandelnden Fläche eingestellt. Beim Wendevorgang kommt es häufig zu Schwankbewegungen der Maschine, beispielsweise beim Durchfahren oder Überqueren von Spurrillen, so daß das Verteilergestänge die zu behandelnde Fläche berührt. Dieses ist nicht gewünscht, weil es zu Beschädigungen am Gestänge oder Maschine führen kann. Es ist möglich, per Handsteuerung das Verteilergestänge zum Wendevorgang anzuheben. Dieses ist jedoch eine unbefriedigende Lösung.

Der Erfindung liegt die Aufgabe zugrunde, hier auf einfache Weise mit einfachen Mitteln Abhilfe zu schaffen.

Diese Aufgabe wird erfindungsgemäß durch die kennzeichnenden Merkmale des Anspruches 1 gelöst. Infolge dieser Maßnahmen wird durch die zwischen dem Verteilergestänge und dem Rahmen angeordnete Höhenmeßeinrichtung in einfacher Weise die Relativlage des Verteilergestänges am Rahmen zu der Bodenoberfläche ermittelt. Diese Höhenmeßeinrichtung kann beispielsweise als Schiebe- oder Drehpotentiometer ausgebildet sein. Wenn die Materialausbringung am Ende der Arbeitsbahn vor Beginn des Wendevorganges über den Zentralschalter abgeschaltet wird, wird mittels des in der Steuer- und/oder Regeleinrichtung hinterlegten Programmes oder Schaltung das Verteilergestänge mittels der Höheneinstelleinrichtung um mindestens 30 cm, vorzugsweise etwa 50 cm angehoben, so daß das Verteilergestänge einen ausreichend großen Abstand zu der behandelnden Fläche erhält. Nach Ende des Wendevorganges und zu Beginn der Arbeitsbahn wird durch Betätigen des Zentralschalters zum Wiedereinschalten der Materialausbringung das Verteilergestänge mittels der Höheneinstelleinrichtung auf die vorgegebene Arbeitshöhe abgesenkt und in die richtige Neigungslage eingestellt. Hierbei kann das Programm oder die Schaltung derart ausgelegt sein, daß zunächst das Verteilergestänge abgesenkt wird und nach einer kurzen Zeitverzögerung erst die Materialausbringung eingeschaltet wird.

Weiterhin ist bei einer Maschine mit einer zwischen dem Verteilergestänge und dem Rahmen angeordneten Neigungsverstelleinrichtung für das Verteilergestänge vorgesehen, daß die Neigungsverstellungseinrichtung mit der Steuer- und Regeleinrichtung verbunden ist. Hierbei können dem Verteilergestänge bzw. dem Rahmen Winkelsensoren zugeordnet sein, mittels welcher die Neigung des Verteilergestänges gegenüber dem Rahmen ermittelbar ist.

Hierbei ist in einer Weiterbildung der Erfindung vorgesehen, daß die Steuer- und Regeleinrichtung ein Steuer- und/oder Regelprogramm aufweist, welches derart ausgelegt ist, daß durch Betätigen des Zentralschalters zum Ausschalten der Materialausbringung, falls das Verteilergestänge gegenüber dem Rahmen geneigt ist, das Verteilergestänge mittels der Neigungseinstelleinrichtung in eine rechtwinkelige Position zum Rahmen eingestellt und beim wieder Einschalten der Materialausbringung über den Zentralschalter mittels der Neigungs-einstelleinrichtung in die "gespiegelte Neigung" verstellt wird.

Desweiteren kann vorgesehen sein, daß die Steuer- und/oder Regeleinrichtung derart ausgelegt ist, daß nach einer kurzen Zeitverzögerung die Materialausbringung eingeschaltet wird, während das Absenken und Einstellen der Neigung sofort eingeleitet wird.

Desweiteren ist in einer Weiterbildung der Erfindung vorgesehen, daß in der Steuer- und/oder Regeleinrichtung standortspezifische Daten über das zu bearbeitende Feld hinterlegt sind und ein Standortbestimmungssystem mit der Steuer- und Regeleinrichtung zusammenwirkt, daß in der Steuer- und Regeleinrichtung standortspezifisch hinterlegt ist, an welcher Position die Materialausbringung ein- bzw. ausgeschaltet wird und/oder die Höhen- und/oder Neigungsverstellung durchgeführt wird.

Weitere Einzelheiten der Erfindung sind der Beispielsbeschreibung und den Zeichnungen zu entnehmen. Hierbei zeigen
- Fig.1: ein Ausschnitt eines zu bearbeitenden Feldes in Prinzipdarstellung und in perspektivischer Darstellung und

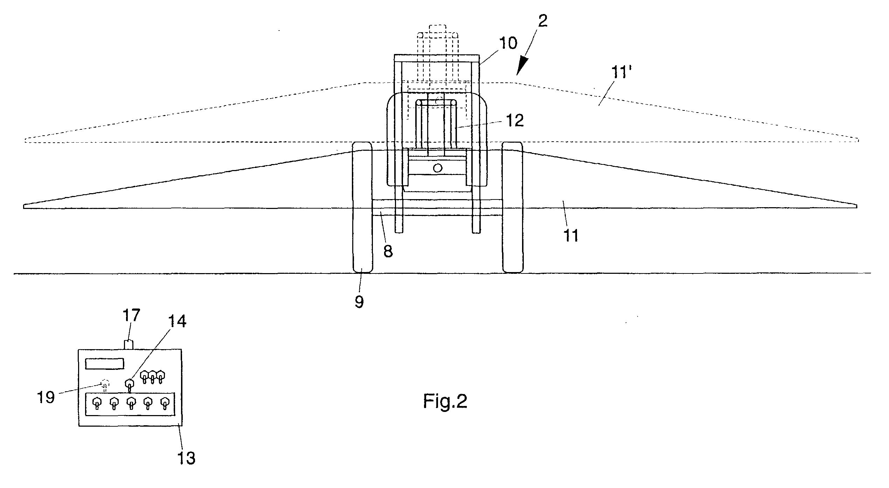

- Fig.2: eine Feldspritze in Rückansicht und in Prinzipdarstellung.

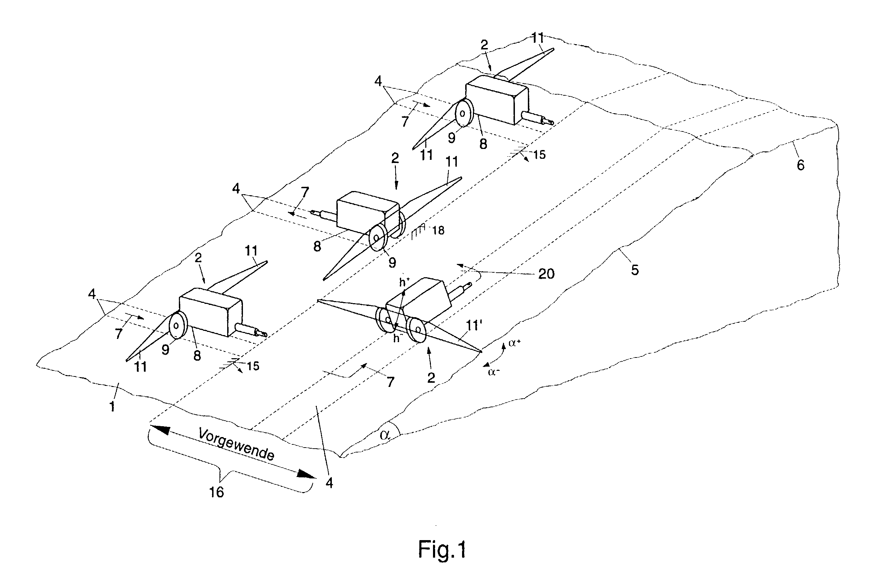

Die Fig.1 zeigt einen Ausschnitt eines Feldes 1, welches mit einer Feldspritze 2 bearbeitet werden soll.

Der Ausschnitt des Feldes 1 zeigt in perspektivischer und prinzipieller Weise das Vorgewende 3 und die im Feld 1 angelegten Fahrgassen 4, wobei der vordere Teil des Feldes an einem Hang 5 und der übrige Teil in einer Ebene 6 gelegen ist.

Die landwirtschaftliche Feldspritze 2 beginnt in der unteren Fahrgasse 4 mit der Bearbeitung des Feldes 1, wobei die Feldspritze 2 in Pfeilrichtung 7 über das Feld 1 bewegt wird.

Die Feldspritze 2 weist einen Rahmen 8 mit einem Fahrwerk 9 auf. Die Feldspritze 2 wird über einen nicht dargestellten Schlepper über das Feld 1 gezogen. An dem Rahmen 8 der Feldspritze 2 ist ein Höhenverstellungsgestänge 10 angeordnet, an welchem das Verteilergestänge 11, welches mittels der Höheneinstelleinrichtung 12 in unterschiedlichen Höhenlage zum Rahmen 8 bzw. zu der bearbeiteten Zielfläche einzustellen ist.

Desweiteren ist der Feldspritze 2 eine bekannte und daher nicht dargestellte Dosierarmatur mit einer elektronischen Steuer- und Regeleinrichtung 13, die einen Zentralschalter 14 zum Ein- und Ausschalten der Spritzmittelausbringung aufweist, zugeordnet.

Wenn die Feldspritze 2 den Punkt 15, d.h. das Vorgewende 16 auf dem Feld 1 erreicht hat, wird über den Zentralschalter 14 die Spritzmittelausbringung in bekannter Weise abgeschaltet. Die Steuer- und Regeleinrichtung 13 ist derart programmiert bzw. ausgelegt, daß beim Abschalten der Materialausbringung durch Betätigen des Zentralschalters 14 das Verteilergestänge 11 mittels der Höheneinstelleinrichtung 12 um mindestens 30, in bevorzugter Weise um etwa 50 cm gegenüber der eingestellten Arbeitslage in die mit gestrichelten Linien dargestellten Position 11' angehoben wird. Zwischen dem Rahmen 8 und dem Verteilergestänge 11 ist eine nicht dargestellte Höhenmeßeinrichtung, die beispielsweise als Drehpotentiometer oder Schiebepotentiometer ausgebildet sein kann, angeordnet. Diese Höhenmeßeinrichtung ist über eine Leitung 17 mit der Steuer- und Regeleinrichtung 13 verbunden.

Zu Beginn des Ausbringvorganges, beispielsweise des Spritzens, erfolgt die Kalibrierung der horizontalen Null-Lage des Gestänges 11, d.h. das Gestänge 11 wird parallel zur Fahrzeugsachse im entriegelten Zustand in dem gewünschten Abstand der Düsen, die an dem Verteilergestänge 11 angeordnet sind, zu der Zielfläche, in der Regel etwa 50 cm eingestellt. Diese Lage des Verteilergestänges 11 relativ zum Rahmen 8 wird von der Höhenmeßeinrichtung gemessen und der zentralen Steuer- und Regeleinrichtung 13 mitgeteilt. Desweiteren können zwischen dem Verteilergestänge 11 und dem Rahmen 8 nicht dargestellte Winkelsensoren zur Ermittlung der Winkeleinstellung des Verteilergestänges 11 gegenüber dem Rahmen 8 angeordnet sein.

Falls das Verteilergestänge 11 mit der nicht dargestellten Neigungsverstellungseinrichtung dem Bestreben des Verteilergestänges 11 aufgrund der Hanglage sich horizontal einzustellen entgegengewirkt ist, wird das Verteilergestänge 11 mittels der Neigungseinstelleinrichtung in eine rechtwinkelige Lage zum Rahmen 8 eingestellt.

Beim Wiedereinschalten der Materialausbringung nach Beendigung des Wendevorganges an dem Punkt 18, wird der Zentralschalter 14 in Position "Spritzen" gebracht. Hierbei ist die Regel- und Steuereinrichtung 13 derart ausgelegt, daß das Verteilergestänge 11 mittels der Höheneinstellvorrichtung auf die vorgegebene Arbeitshöhe abgesenkt wird. Hierbei gibt die Höhenmeßeinrichtung bei Erreichen der Arbeitshöhe ein Signal an die Regel- und Steuereinrichtung 13 ab, damit die Höheneinstelleinrichtung das Verteilergestänge 11 in der vorgegebenen Arbeitshöhe einstellt.

Falls erforderlich, wird über die Neigungseinstellung das Verteilergestänge 11 in die gewünschte parallele Lage zur Zielfläche gebracht. Hierbei ist die Steuer- und Regeleinrichtung 13 derart ausgelegt, daß das Verteilergestänge 11 über die Neigungseinstellung in gespiegelter Weise zu der hervorgehenden Arbeitsbahn eingestellt wird.

Desweiteren kann die Steuer- und Regeleinrichtung 13 derart ausgelegt sein, daß erst nach einer kurzen Zeitverzögerung von ca. 1 - 2 sec. die Materialausbringung eingeschaltet wird, während das Absenken und Einstellen der Neigung sofort nach Betätigen des Zentralschalters 14 in Position "Spritzen" eingeleitet wird.

Desweiteren kann an der Steuer- und Regeleinrichtung 13 ein weiterer Schalter "Senken" 19 vorgesehen sein, mittels welchem kurz vor Beenden des Wendevorganges, beispielsweise an der Position 20 das Senken des Verteilergestänges 11 über die Höheneinstelleinrichtung sowie die Neigungsverstellung des Verteilergestänges 11 durch die Neigungs-einstelleinrichtung durchgeführt wird. Der Zentralschalter 14, um die Materialausbringung an der Stelle 18 fortzusetzen, wird dann bei Erreichen der Feldspritze 2 bzw. bei Erreichen des Verteilergestänges 11 an der Position 18 betätigt, so daß die Materialausbringung eingeleitet wird.

In einer Weiterbildung der Erfindung kann vorgesehen sein, daß die Steuer- und Regeleinrichtung 13 derart ausgelegt ist, daß standortspezifische Daten über das zu bearbeitende Feld zu hinterlegen sind, und daß ein Standortbestimmungssystem mit der Steuer- und Regeleinrichtung 13 zusammenwirkt. Hierbei ist dann in der Steuer- und Regeleinrichtung 13 standortspezifisch hinterlegt, an welcher Position die Materialausbringung eingeschaltet bzw. ausgeschaltet wird und/oder die Höhen- und Neigungsverstellung für das Verteilergestänge 11 durchgeführt wird. Ein derartiges System arbeitet dann vollkommen automatisch.

Es ist auch möglich, die im Ausführungsbeispiel an der elektronischen Steuer- und Regeleinrichtung 13 angeordneten Schalter 17 und 19 sowie übrige Schalter oder Tasten an einem bekannten sogenannten Multifunktionsschalthebel anzuordnen bzw. einige Schalt- und Betätigungsfunktionen dem Multifunktionshebel zuzuordnen.

## Patentansprüche

1. Landwirtschaftliche Maschine zum Verteilen von Material, vorzugsweise Feldspritze mit einem Rahmen, einem am Rahmen mittels Höheneinstellvorrichtung in unterschiedlichen Höhen einstellbaren Verteilergestänge, einer Dosierarmatur und einer elektronischen Steuer- und/oder Regeleinrichtung mit einem Zentralschalter zum Ein- und Ausschalten der Materialausbringung, wobei eine mit der Steuer- und Regeleinrichtung (13) verbundene Höhenmesseinrichtung vorgesehen ist, wobei die Steuer- und/oder Regeleinrichtung (13) derart ausgelegt ist, daß beim Abschalten der Materialausbringung durch Betätigen des Zentralschalters (14) das Verteilergestänge (11) mittels der Höheneinstelleinrichtung um zumindest 30 cm mittels der Höheneinstelleinrichtung angehoben und beim Einschalten der Materialausbringung durch Betätigen des Zentralschalters (14) das Verteilergestänge (11) mittels der Höheneinstelleinrichtung auf die vorgegebene Arbeitshöhe abgesenkt wird, wobei zwischen dem Verteilergestänge und dem Rahmen eine Neigungsverstelleinrichtung für das Verteilergestänge angeordnet ist, dadurch gekennzeichnet, daß die Höhenmeßeinrichtung zwischen dem Verteilergestänge (11) und dem Rahmen (8) angeordnet ist, daß die Neigungsverstelleinrichtung mit der Steuer- und Regeleinrichtung (13) verbunden ist, daß die Streuer- und/oder Regeleinrichtung derart ausgelegt ist, daß bei Einstellungen einer Neigungsverstellung das Verteilgestänge im Bereich des Absenkvorganges mittels der Neigungseinstellung in vorgehende, jedoch "gespiegelte Neigung" verstellt wird.

2. Maschine nach Anspruch 1, dadurch gekennzeichnet, daß dem Verteilergestänge (11) bzw. dem Rahmen (8) Winkelsensoren zugeordnet sind, mittels welcher die Neigung des Verteilergestänges (11) gegenüber dem Rahmen (8) ermittelbar ist.

3. Maschine nach Anspruch 1, dadurch gekennzeichnet, daß die Steuer- und Regeleinrichtung ein Steuer- und/oder Regelprogramm (13) aufweist, welches derart ausgelegt ist, daß durch Betätigen des Zentralschalters (14) zum Ausschalten der Materialausbringung, falls das Verteilergestänge (11) gegenüber dem Rahmen (8) geneigt ist, mittels der Neigungseinstelleinrichtung in eine rechtwinkelige Position zum Rahmen (8) stellt und beim wieder Einschalten der Materialausbringung über den Zentralschalter (14) mittels der Neigungseinstelleinrichtung in die "gespiegelte Neigung" verstellt.

4. Maschine insbesondere nach Anspruch 1, dadurch gekennzeichnet, daß die Steuer- und Regeleinrichtung (13) einen weiteren Schalter (18) "Senken" aufweist, daß durch Betätigen dieses Schalters (18) über die Höheneinstelleinrichtung das Verteilergestänge (11) in die vorgesehene Arbeitslage abgesenkt und, falls eine Neigungsverstellung eingestellt war, das Verteilergestänge (11) mittels der Neigungseinstelleinrichtung in die vorhergehende, jedoch gespiegelte Neigung verstellt wird.

5. Maschine insbesondere nach Anspruch 1, dadurch gekennzeichnet, daß die Steuer- und/oder Regeleinrichtung (13) derart ausgelegt ist, daß nach einer kurzen Zeitverzögerung die Materialausbringung eingeschaltet wird, während das Absenken und Einstellen der Neigung sofort eingeleitet wird.

6. Maschine nach einem oder mehreren der vorstehenden Ansprüche, dadurch gekennzeichnet, daß in der Steuer- und/oder Regeleinrichtung (13) standortspezifische Daten über das zu bearbeitende Feld (1) hinterlegt sind und ein Standortbestimmungssystem mit der Steuer- und Regeleinrichtung (13) zusammenwirkt, daß in der Steuer- und Regeleinrichtung (13) standortspezifisch hinterlegt ist, an welcher Position die Materialausbringung ein- bzw. ausgeschaltet wird und/oder die Höhen und/oder Neigungsverstellung durchgeführt wird.

## Claims

1. Agricultural machine for distributing material, preferably a field sprayer, said machine having a frame, a distributor tube assembly which can be set to different heights on the frame by means of a height adjuster, a metering arrangement and an electronic controlling and/or regulating means provided with a central switch for switching-on and - off the distribution of material, a height measuring means being provided, which is connected to the controlling and regulating means (13), the controlling and/or regulating means (13) being adapted in such a manner that, when the material distribution is switched-off by actuating the central switch (14), the distributor tube assembly (11) is raised by means of the height adjuster by at least 30 cm and, when the material distribution is switched-on by actuating the central switch (14), the distributor tube assembly (11) is lowered to the prescribed operational height by means of the height adjuster, an inclination adjuster for the distributor tube assembly (11) being disposed between the distributor tube assembly (11) and the frame, characterised in that the height measuring means is disposed between the distributor tube assembly (11) and the frame (8), in that the inclination adjuster is connected to the controlling and regulating means (13), and in that the controlling and/or regulating means is adapted in such a manner that, with adjustments of an inclination adjuster, the distributor tube assembly is adjusted into a previous inclination, but "reflected inclination" by means of the inclination adjuster during the lowering process.

2. Machine according to claim 1, characterised in that angle sensors are associated with the distributor tube assembly (11), or respectively with the frame (8), and the inclination of the distributor tube assembly (11) relative to the frame (8) is determinable by means of said sensors.

3. Machine according to claim 1, characterised in that the controlling and regulating means includes a controlling and/or regulating program (13), which is adapted in such a manner that, by actuating the central switch (14) to switch-off the material distribution, if the distributor tube assembly (11) is inclined relative to the frame (8), the distributor tube assembly is put into a perpendicular position relative to the frame (8) by means of the inclination adjuster and, if the material distribution is switched-on again via the central switch (14), the distributor tube assembly is adjusted into the "reflected inclination" by means of the inclination adjuster.

4. Machine, more especially according to claim 1, characterised in that the controlling and regulating means (13) includes an additional "lowering" switch (18), in that, by actuating this switch (18) via the height adjuster, the distributor tube assembly (11) is lowered into the envisaged operational position and, if an inclination adjustment was set, the distributor tube assembly (11) is adjusted into the previous, but reflected, inclination by means of the inclination adjuster.

5. Machine, more especially according to claim 1, characterised in that the controlling and/or regulating means (13) is adapted in such a manner that, after a short time delay, the distribution of material is switched-on, while the lowering and setting of the inclination are introduced immediately.

6. Machine according to one or more of the preceding claims, characterised in that data concerning the field (1) to be worked, which are specific to the position, are input into the controlling and/or regulating means (13), and a position determining system co-operates with the controlling and regulating means (13), and in that the position, in which the distribution of material is switched-on or -off, and/or the position, in which the height adjustment and/or inclination adjustment are/is accomplished, are/is input into the controlling and regulating means (13) as data specific to the position.

## Revendications

1. Machine agricole pour distribuer des produits notamment pulvérisateur agricole comportant
- un châssis avec une installation de réglage en hauteur permettant de régler une flèche distributrice à des hauteurs différentes,
- une robinetterie de dosage et une installation de commande et/ou de régulation électronique avec un interrupteur central pour couper ou brancher la distribution de produits,
- une installation de mesure de hauteur reliée à l'installation de commande et de régulation (13), l'installation de commande et/ou de régulation (13) étant conçue pour qu'à l'arrêt de la distribution de produits par actionnement du commutateur central (14), la flèche distributrice (11) est relevée par l'installation de réglage en hauteur d'au moins 30 cm avec cette installation et lors de la remise en route de la distribution de produits par actionnement de l'interrupteur central (14), la flèche distributrice (11) est abaissée à la hauteur de travail précédente par l'installation de réglage de hauteur, et
- entre la flèche distributrice et le châssis, une installation d'inclinaison pour la flèche distributrice,
caractérisée en ce que
- l'installation de mesure de hauteur est installée entre la flèche distributrice (11) et le châssis (8),
- l'installation de réglage d'inclinaison est reliée à l'installation de commande et de régulation (13),
- l'installation de commande et/ou de régulation est conçue pour qu'en réglant une inclinaison de la flèche distributrice dans la zone de la phase d'abaissement, à l'aide de l'installation de réglage, on assure un réglage dans une position symétrique par rapport à la position antérieure.

2. Machine selon la revendication 1,
caractérisée en ce que
des capteurs d'angle associés à la flèche distributrice (11) ou au châssis (8) permettent de déterminer l'inclinaison de la flèche (11) par rapport au châssis (8).

3. Machine selon la revendication 1,
caractérisée en ce que
l'installation de commande et de régulation comporte un programme de commande et/ou de régulation (13) conçu pour que par actionnement du commutateur central (14) pour couper la distribution de produits, si la flèche distributrice (11) est inclinée par rapport au châssis (8), à l'aide d'une installation de réglage d'inclinaison, on la met dans une position perpendiculaire au châssis (8), et lorsqu'on rebranche la distribution de produits par l'interrupteur central (14), on établit l'inclinaison symétrique à l'aide de l'installation de réglage d'inclinaison.

4. Machine notamment selon la revendication 1,
caractérisée en ce que
l'installation de commande et de régulation (13) comporte un autre commutateur (18) pour « abaisser » et en actionnant ce commutateur (18), l'installation de réglage en hauteur abaisse la tringlerie distributrice (11) dans la position active prédéterminée, et si un réglage d'inclinaison était prévu, la flèche distributrice (11) se règle à l'inclinaison précédente mais symétrique, à l'aide de l'installation de réglage d'inclinaison.

5. Machine selon la revendication 1,
caractérisée en ce que
l'installation de commande et/ou de régulation (13) est conçue pour qu'après une courte temporisation, la distribution de produits soit remise en route alors que l'abaissement ou le réglage de l'inclinaison sont effectués immédiatement.

6. Machine selon l'une ou plusieurs des revendications précédentes,
caractérisée en ce que
l'installation de commande et/ou de régulation (13) contient des données spécifiques de localisation correspondante au champ à travailler (1), et un système de localisation coopère avec l'installation de commande et de régulation (13) pour enregistrer dans l'installation de commande et de régulation (13) de façon spécifique à la localisation, une position dans laquelle la distribution de matière doit être coupée, et/ou les réglages en hauteur et/ou en inclinaison à effectuer.
